# EUROPEAN PATENT SPECIFICATION

(11) **EP 2 804 085 B1**
(45) Date of publication and mention of the grant of the patent: **19.12.2018**
(21) Application number: 13736265.3
(22) Date of filing: 11.01.2013
(51) Int. Cl.: G06F 3/0485

(54) **INFORMATION TERMINAL WHICH DISPLAYS IMAGE AND IMAGE DISPLAY METHOD**
INFORMATIONSENDVORRICHTUNG ZUR ANZEIGE EINES BILDES UND BILDANZEIGEVERFAHREN
TERMINAL D'INFORMATIONS QUI AFFICHE DES IMAGES ET PROCÉDÉ D'AFFICHAGE D'IMAGES

(30) Priority: 13.01.2012 JP 2012005510
(43) Date of publication of application: 19.11.2014
(73) Proprietor: NTT Docomo, Inc., Tokyo 100-6150 (JP)
(72) Inventor: MURAKAMI, Keiichi, Tokyo 100-6150 (JP); YAMAKI, Taeko, Tokyo 100-6150 (JP); OOTSU, Kaori, Tokyo 100-6150 (JP)
(74) Representative: Moreland, David
(86) International application number: PCT/JP2013/050485
(87) International publication number: WO 2013/105666

(56) References cited:
- JP-A- H0 736 438
- JP-A- 2009 198 639
- JP-A- 2011 198 249
- US-A1- 2007 156 723

## Description

### TECHNICAL FIELD

The present invention relates to an information terminal for displaying an image and an image displaying method.

### BACKGROUND ART

An information terminal such as a highly-functional mobile phone (which is a smart phone, for example) can display various pieces of information and can perform various processes a user wants as well as radio communications. In general, although user interfaces not only include a visual display unit but also include an auditory user interface, more information is exchanged via the display unit. Especially, there are many cases where a user operates a display screen that embeds a contact sensing type sensor (touch sensor) by using a stylus or a finger so as to input/output information. Normally, information to be provided to a user does not fit into only one screen, so it is necessary to scroll the screen in directions, for example, from side to side and up and down, for the user to browse the whole information. It is preferable to get a desired screen in a short time by scrolling. That is, it is preferable that scrolling is performed at high speed. Especially, in a case of using a small portable information terminal, since the display screen is relatively small, many occasions of scrolling tend to occur, thus, speed-up is especially required.

As a conventional technique for speeding up scrolling, there is a technique in which an image that may be displayed is stored in a memory beforehand as a cached image or a captured image, such that the image can be redrawn as necessary (this technique is described in the patent document 1, for example).

### [Prior art document]

[Patent document 1] JP2011-187051

US2007/0156723A discloses the use of browsing history to re-interpret the user input on a screen in which the user identifies a data item using a cursor. The browsing history is logged and includes type of data, access time and mode of data, cursor path along browsed data, cursor speed, user's reaction time and latency of the applications run on the device.

### SUMMARY OF THE INVENTION

### PROBLEM TO BE SOLVED BY THE INVENTION

However, as for the conventional technique described in the patent document 1, it is necessary to obtain and store many captured images based on scrolling directions, whereas there are many images which are unlikely displayed again. Accordingly, in such a conventional technique, there is a problem in that cache efficiency is not necessarily good.

An object of the present invention is to provide an information terminal and an information displaying method that improve cache efficiency of captured images that are stored beforehand for speeding up screen scrolling in the information terminal.

The invention is defined by the terminal according to Claim 1 and the method according to Claim 5.

### EFFECT OF THE PRESENT INVENTION

According to the disclosed invention, it becomes possible to improve cache efficiency of captured images that are stored beforehand for speeding up screen scrolling in an information terminal.

### BRIEF DESCRIPTION OF THE DRAWINGS

Fig. 1 is a functional block diagram of an information terminal according to an embodiment;
Fig. 2 is a diagram schematically showing relationship between object images, a background image, a superimposed image and a captured image;
Fig. 3 is a flowchart showing an example of a method for obtaining a captured image;
Fig. 4 is a flowchart of a method for displaying an image;
Fig. 5 is a flowchart showing another method example for obtaining a captured image;
Fig. 6 is a flowchart showing still another method example for obtaining a captured image, and
Fig. 7 is a flowchart showing a method example for deleting a captured image.

### EMBODIMENTS FOR CARRYING OUT THE INVENTION

Embodiments are described from the viewpoints of the following aspects with reference to attached figures. In the figures, the same reference numbers or reference symbols are provided for similar elements.
1. Information terminal
2. Method for obtaining captured image
3. Image displaying method
4. Another method for obtaining captured image
5. Still another method for obtaining captured image
6. Deletion of captured image

### [Embodiment 1]

### <1. Information terminal>

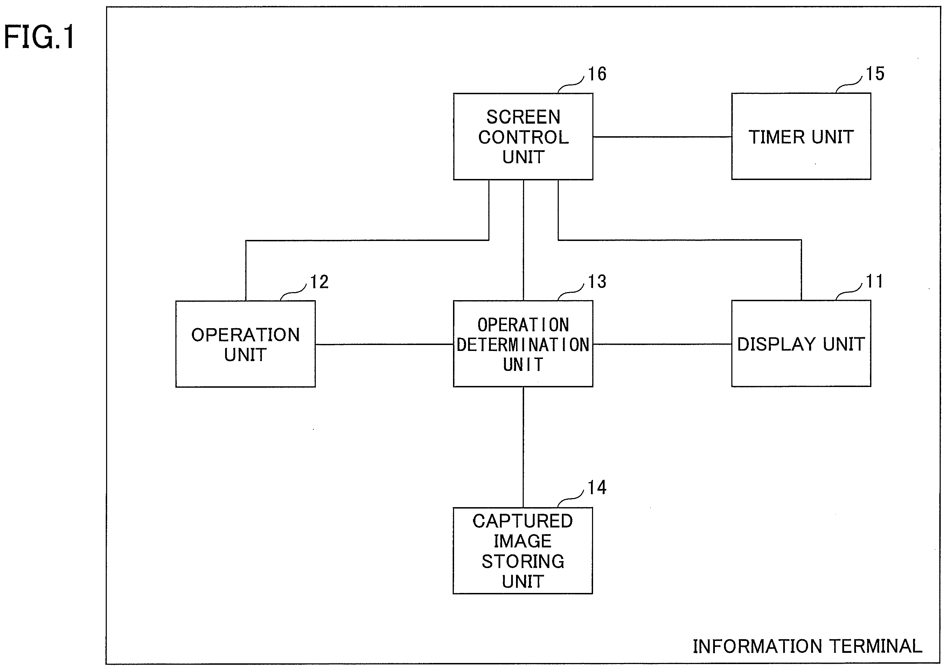

Fig. 1 shows a functional block diagram of an information terminal according to an embodiment. Fig. 1 shows elements particularly related to the present embodiment in elements for executing various functions provided in the information terminal. The information terminal may be any apparatus that can display information for a user. Typically, the information terminal is a mobile terminal, but it may be a fixed terminal. Specifically, the information terminal may be a user apparatus, a mobile phone, a high-functionality mobile phone, a smart phone, a tablet-type computer, a personal digital assistant, a portable personal computer, a perm top computer, a lap top computer, a desk top computer and the like, but it is not limited to these. The information terminal of Fig.1 includes, at least, a display unit 11, an operation unit 12, an operation determination unit 13, a captured image storing unit 14, a timer unit 15 and a screen control unit 16.

The display unit 11 is a user interface configured to visually display information to a user of the information terminal. Specifically, the display unit 11 may be a display, a control panel including a keypad, a cathode-ray tube (CRT), a liquid crystal display (LCD), an organic light emitting panel, a touch screen and the like, but it is not limited to these.

The operation unit 12 receives operation for causing the information terminal to perform an action intended by the user. A representative example of an action intended by the user is an action indicating selection of a button or scrolling of the screen or the like. The operation unit may include, for example, buttons that can be mechanically selected, and also, it may include any mechanical operation units such as a keyboard, a mouse, a trackball and the like. The operation unit 12 may include an voice inputting unit such as a microphone such that the information terminal can execute operation that the user speaks.

The display unit 11 and the operation unit 13 may be provided in separated regions, or may be provided together. For example, the display unit 11 and the operation unit 13 may be unified such that the display unit 11 of the present embodiment is covered by a transparent panel having a touch sensor, and can detect movement of a finger of the user for controlling operation of the information terminal.

The operation determination unit 13 determines what is entered for indicating user's intent. The entry may be performed mechanically, or the entry may be performed as voice entry, or the entry may be performed by touching and the like. In the present embodiment, especially, the operation determination unit 13 determines operation such as scrolling, flicking or the like that the user is going to perform so as to determine what a screen of a scroll destination is, for example. Details of the operation will be described later.

The captured image storing unit 14 stores an image displayed on the display unit 11 as a captured image. Generally, the display unit 11 displays one or more objects superimposed on a background image. That is, a process for displaying objects and a process for displaying the background image are performed in parallel. A captured image showing a state in which an object is superimposed on a background image is created as necessary, and the captured image is stored in the captured image storing unit 14. Or, a captured image showing a state in which one or more objects are arranged may be created and stored. In this application, the object may be any represented object displayed by being superimposed on a background image. The object is typically an icon, a gadget and the like.

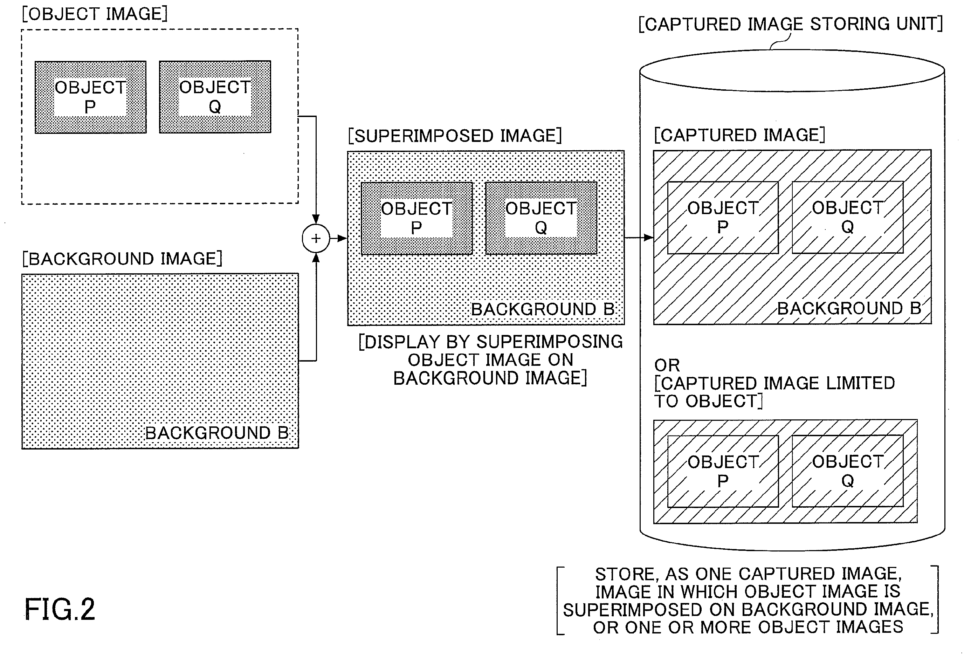

Fig. 2 schematically shows relationship between an object image representing objects, a background image, an image on which these images are superimposed, and a captured image. As shown in the figure, an object image representing one or more objects and a background image representing a background or a wallpaper are superimposed and displayed on the display unit 11. A captured image is created as one image which shows a state in which the images are superimposed and displayed. In the case shown in the figure, the captured image is one represented as one image showing a state displayed on the display unit 11. More particularly, the captured image is an image representing a state in which a background that occupies the whole or a large part of the display unit 11 and one or more objects are superimposed. However, it is not essential that the background occupying the whole or the large part of the display unit 11 is included in the captured image. For example, a captured image which is limited to parts of objects P and Q shown in Fig. 2 may be created.

The timer unit 15 shown in Fig. 1 can measure any time period on the information terminal. In the present embodiment, especially, the timer unit 15 measures a time period during which an image continues to be displayed without change of an object. As described later, if the period exceeds a predetermined threshold, the displayed image is stored in the captured image storing unit 14 as a captured image.

The screen control unit 16 controls operation related to and attached to displaying of information by the display unit 11. For example, the screen control unit 16 performs operation control of the operation unit 12, calculation of a screen movement amount to a destination of scroll performed by a user, creation and deletion of a captured image, operation control of transition between superimposed images and a captured image, and the like. Detailed of operation is described later.

Although Fig. 1 only shows a part of the user interface for the sake of simplicity of explanation, the information terminal may be provided with any function for providing information to a user, and may be provided with any function for obtaining information entered by the user. More generally, the information terminal may be provided with any visual, aural or mechanical user interfaces.

### <2. A method for obtaining capture image>

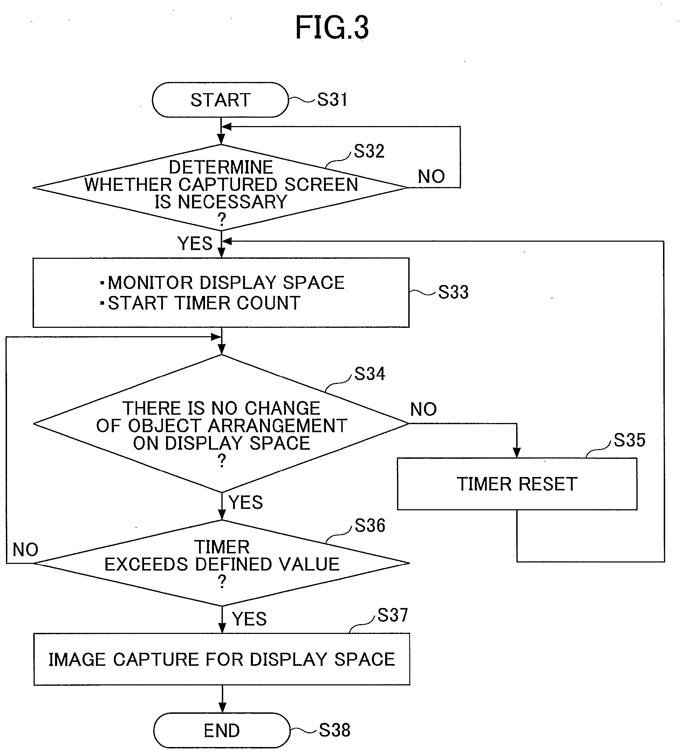

Fig. 3 is a flowchart showing an example of a method for obtaining a captured image. This method is performed by the information terminal shown in Fig. 1. In this case, an image is displayed on the display unit 11 of the information terminal, and the image is stored in the captured image storing unit 14 as a captured image under a certain condition according to a procedure described below.

The flow starts from step S31, and goes to step S32. At least three cases for reaching step S32 can be considered. A first case is a case in which the screen control unit 16 analyzes a displayed image, determines whether scrolling is available for the image, and it is determined that scrolling is available. A second case is a case in which the screen control unit 16 checks setting of the information terminal which permits or prohibits high-speed scrolling, and determines that the high-speed scrolling is permitted. Depending on a user, the high-speed scrolling may be prohibited. A third case is a case in which the screen control unit 16 checks whether there is a sufficient capacity that can be used for saving or storing a captured image, and determines there is the sufficient capacity.

In step S33, the screen control unit 16 obtains information of the image displayed on the display unit 11, and starts time measurement by the timer unit 15. Normally, the display unit 11 only displays a part of provided information. The user scrolls the display frame on the display unit 11 in directions such as from right to left or up and down, so that the user can thoroughly browse provided information. In step S33, the screen control unit 16 grasps the whole view of the image scrolled in this way.

In step S34, in a case where the display unit 11 displays one or more objects that are superimposed on a background image, the screen control unit 16 determines whether arrangement or a position of at least one object is changed. If it is changed, the flow goes to step S35, and the time measured by the timer unit 15 is reset, and the flow returns to step S33.

In step S34, in a case where the time measured by the timer unit 15 exceeds a defined value without change of arrangement of any displayed object, the flow goes to step S37 from step S36. In step S36, if the time does not exceed the defined value, the flow returns to step S34, so that presence or absence of change of arrangement of the object is determined.

The case in which the step reaches step S37 is a case where the period measured from step S33 exceeds the defined value while arrangement of the object remains unchanged. That is, the image remains being displayed without change at least during the defined value. There is a high possibility that such an image will be displayed in the future again. Therefore, in step S37, a captured image is created in a state where one or more objects and the background image are being displayed on the display unit 11 currently, and the captured image is stored in the captured image storing unit 14. Or, a captured image limited to object part may be created and stored. Then, the flow goes to step S38, so that the procedure for obtaining the captured image ends. Accordingly, various captured images are stored in the captured image storing unit 14. Another method for obtaining a captured image will be described later.

### <3. Image displaying method>

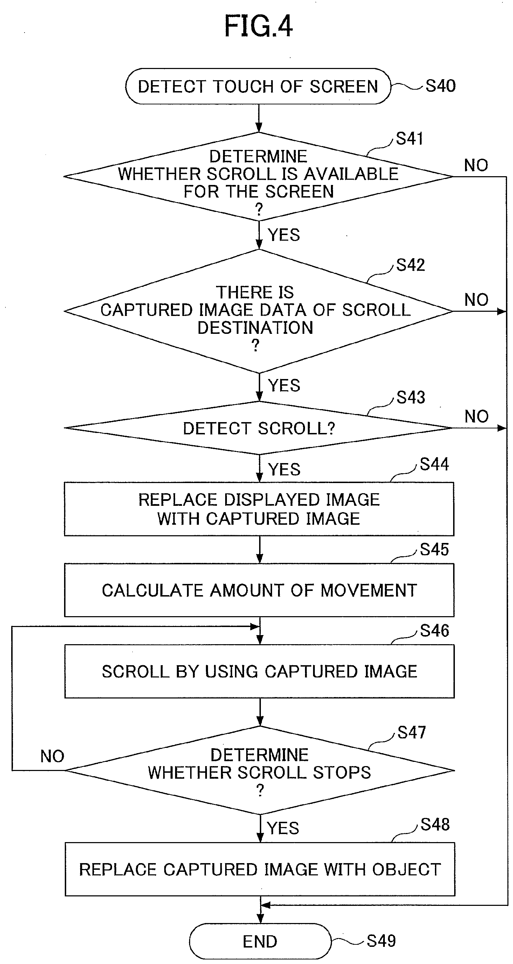

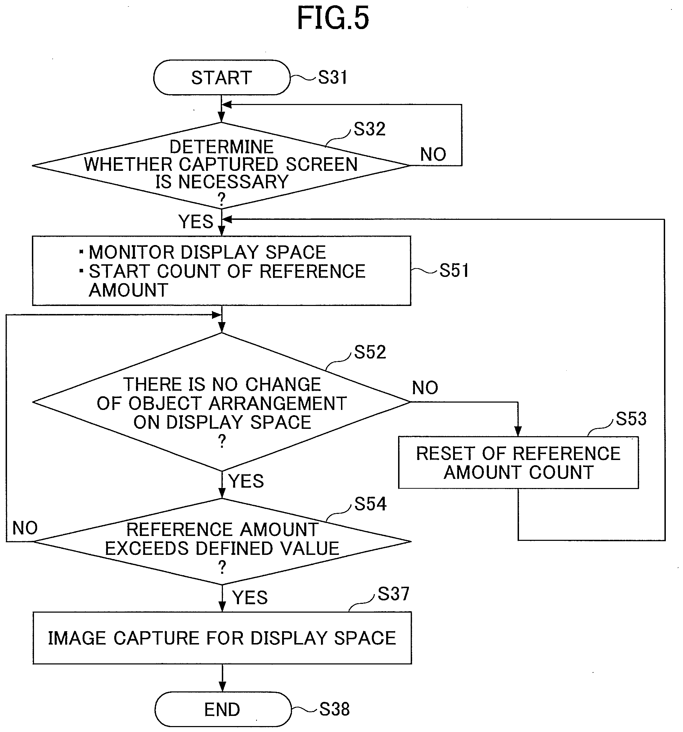

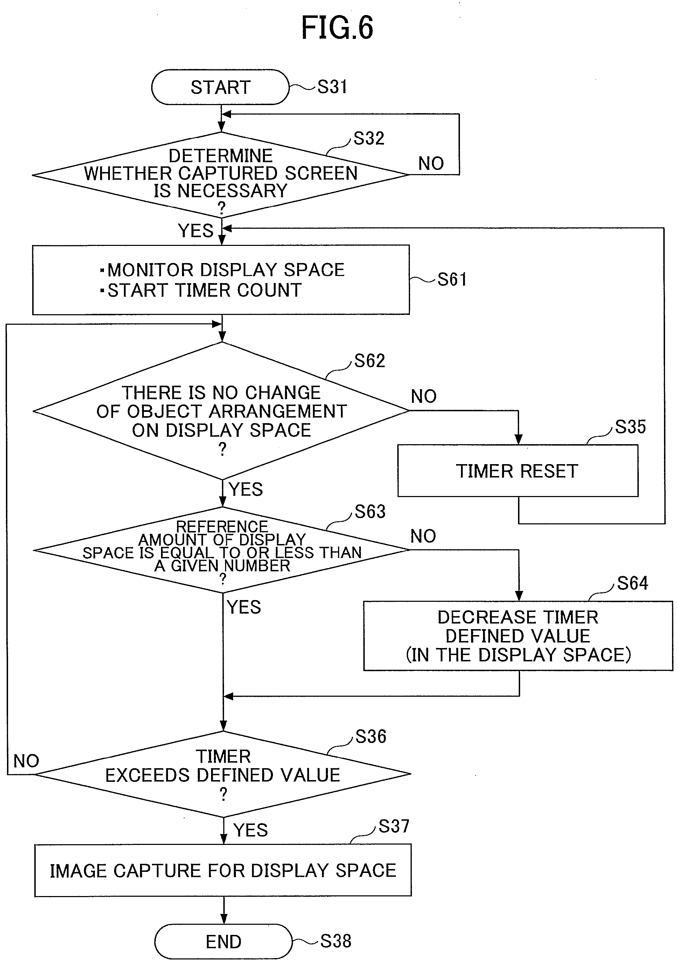

Fig. 4 shows a flowchart of a method for the information terminal to display an image. In addition to the method of Fig. 4, a method shown in Fig. 3 (or Fig. 5 or Fig. 6) is being executed. The method shown in Fig. 4 starts from step S40. In step S40, it is assumed that a user of the information terminal touches the display unit 11, and performs a certain operation. Such an operation is entered by the operation unit 12 and performed by the operation determination unit 13.

In step S41, the screen control unit 16 determines whether the image displayed on the display unit 11 can be scrolled. If the image cannot be scrolled, the flow goes to step S49, and the process ends. If the image can be scrolled, the flow goes to step S42.

In step S42, the screen control unit 16 determines whether a captured image of a scroll destination that is a destination of scrolling to be performed is stored in the captured image storing unit 14. If the captured image is not stored, the flow goes to step S49, and the process ends. If the image is stored, the flow goes to step S43. A procedure for storing the captured image is performed according to the flowchart of Fig. 3 (or Fig. 5 or Fig. 6).

In step S43, it is determined whether the user has performed a scrolling operation, and if it is determined that the scrolling has not been performed, the flow goes to step S49, and the process ends. If the scrolling operation is detected, the flow goes to step S44.

In step S44, the screen control unit 16 replaces the image (image being displayed with objects being superimposed on the background image) displayed on the display unit 11 with a captured image. In a case where the captured image includes the background image, the whole image displayed on the screen is replaced with the captured image. In a case where the captured image only includes the part of objects, an image of the part of objects in the image displayed on the screen is replaced with the captured image.

In step S45, the screen control unit 16 analyzes movement of a finger of the user (such as speed, direction, distance) to calculate a screen moving amount to the scroll destination.

In step S46, the screen control unit 16 repeats display and replacement of captured images so as to display a situation of scrolling on the display unit 11.

In step S47, it is determined whether the screen reaches the scroll destination (whether scrolling stops). If the screen has not reached the scroll destination, the flow returns to step S46, and scrolling is continued. In step S47, when the screen reaches the scroll destination, the flow goes to step S48.

In step S48, the screen control unit 16 replaces the last captured image used for scrolling on the display unit 11 with an image, corresponding to the captured image, in which objects and a background are superimposed, or with an image of objects. As a result, it becomes possible to perform operation for moving or selecting only an object displayed on the background image. Then, the flow goes to step S49, and ends.

In step S46, it is not beneficial that, after scrolling is performed from a first captured image to a next second captured image, the first capture image is held as a candidate for displaying after that. Therefore, the first captured image may be deleted from display candidates after step S46. But, it should be noted that the deletion from the display candidates does not mean deletion of the captured image from the captured image storing unit 14, and that contents of the captured image strong unit 14 are maintained. A modified example in which contents in the captured image storing unit 14 are deleted is described later.

According to the method of the present embodiment, scrolling can be performed at high speed by using captured images when scrolling a screen. In this case, as described in the method shown in Fig. 3, a captured image used for scrolling is only an image for which there is a high possibility of being displayed again in the future (an image in which objects remain still without movement for equal to or more than a certain period). Therefore, the memory capacity of the captured image storing unit 14 is not excessively consumed, and high speed scrolling can be realized with a small memory capacity.

### <4. Another method for obtaining captured image>

Fig. 5 is a flowchart showing another method example for obtaining a captured image. This method is also performed in the information terminal shown in Fig. 1. In the figure, the same reference symbols are assigned to steps or processes that have been described with reference to Fig. 3.

The flow starts from step S31 and goes to step S32. At least three cases can be considered as cases in which the flow reaches step S32. For example, the cases are a case in which scrolling is available for the image, a case in which high-speed scrolling is allowed, and a case in which there is enough capacity for storing a captured image.

In step S51, the screen control unit 16 increments the number of times of reference of the image displayed on the display unit 11. Also, in the same way as step S33, the whole image of the image to be scrolled is grasped by the screen control unit 16.

In step S52, in a case where the display unit 11 displays one or more objects that are superimposed on a background image, the screen control unit 16 determines whether arrangement or a position of at least one object is changed. When it is changed, the flow goes to step S53, and the number of times of reference is reset, and the flow returns to step S53.

In step S52, in a case where the number of times of reference exceeds a defined value without change of arrangement of any displayed object, the flow goes to step S37 from step S54. In step S54, if the number of times does not exceed the defined value, the flow returns to step S52, so that presence or absence of change of arrangement of the object is determined.

The case in which the step reaches step S37 is a case where the number of times of reference that is started to be incremented from step S51 exceeds the defined value while arrangement of the object remains unchanged. That is, the image remains being displayed without change during the period in which the image is referred to the defined number of times. There is a high possibility that such an image will be displayed in the future again. Therefore, in step S37, a captured image is created in a state where one or more objects and the background image are being displayed on the display unit 11 currently, and the captured image is stored in the captured image storing unit 14. Or, a captured image limited to object part may be created and stored. Then, the flow goes to step S38, so that the procedure for obtaining the captured image ends. Accordingly, various captured images are stored in the captured image storing unit 14.

### <5. Still another method for obtaining capture image>

Fig. 6 is a flowchart showing still another method example for obtaining a captured image. This method is also performed in the information terminal shown in Fig. 1.

The flow starts from step S31 and goes to step S32. At least three cases can be considered as cases in which the flow reaches step S32. For example, the cases are a case in which scrolling is available for the image, a case in which high-speed scrolling is allowed, and a case in which there is enough capacity for storing a captured image.

In step S61, the screen control unit 16 obtains information of the image displayed on the display unit 11, and starts time measurement by the timer unit 15. Further, the screen control unit 16 increments the number of times of reference of the image displayed on the display unit 11. In the same way as step S33, the whole image of the image to be scrolled is grasped by the screen control unit 16.

In step S62, in a case where the display unit 11 displays one or more objects that are superimposed on a background image, the screen control unit 16 determines whether arrangement or a position of at least one object is changed. If it is changed, the flow goes to step S35, the flow goes to step S35, and the time measured by the timer unit 15 is reset, and the flow returns to step S61.

In step S62, if arrangement of any displayed object is not changed, the flow goes to step S63.

In step S63, it is determined whether the number of times of reference of the image is equal to or less than a given number. If the number of times is not less than the given number (a case where the number of times is equal to or greater than the given number), the flow goes to step S64.

In step S64, the screen control unit 16 sets the defined value of the timer used in step S36 to be a smaller value. That is, the timer defined value used in step S36 is different depending on the determination result in step S63. A first defined value is used if the number of times of reference is small, and a second defined value which is smaller than the first defined value is used if the number of times of reference is large.

In step S36, it is determined whether the period measured by the timer exceeds the timer defined value. If the period does not exceed the timer defined value, the flow returns to step S62, so that presence or absence of change of arrangement of the object is determined. If the period exceeds the timer threshold, the flow goes to step S37.

The case in which the flow reaches step S37 is a case where the period measured from step S61 exceeds the defined value while arrangement of the object remains unchanged. Since such an image remains unchanged, there is a high possibility that the image will be displayed in the future again. Therefore, in step S37, a captured image is created in a state where one or more objects and the background image are being displayed on the display unit 11 currently, and the captured image is stored in the captured image storing unit 14. Or, a captured image limited to object part may be created and stored. Then, the flow goes to step S38, so that the procedure for obtaining the captured image ends. According to the present method, the length of the timer defined value is different depending on the number of times of reference. A first defined value is used if the number of times of reference is small, and a second defined value which is smaller than the first defined value is used if the number of times of reference is large. If the number of times of reference is large, it can be determined that there is a high possibility that the image is referred to next time. Thus, in this case, the image is stored as a captured image without waiting for elapse of a long period.

### <6. Deletion of captured image>

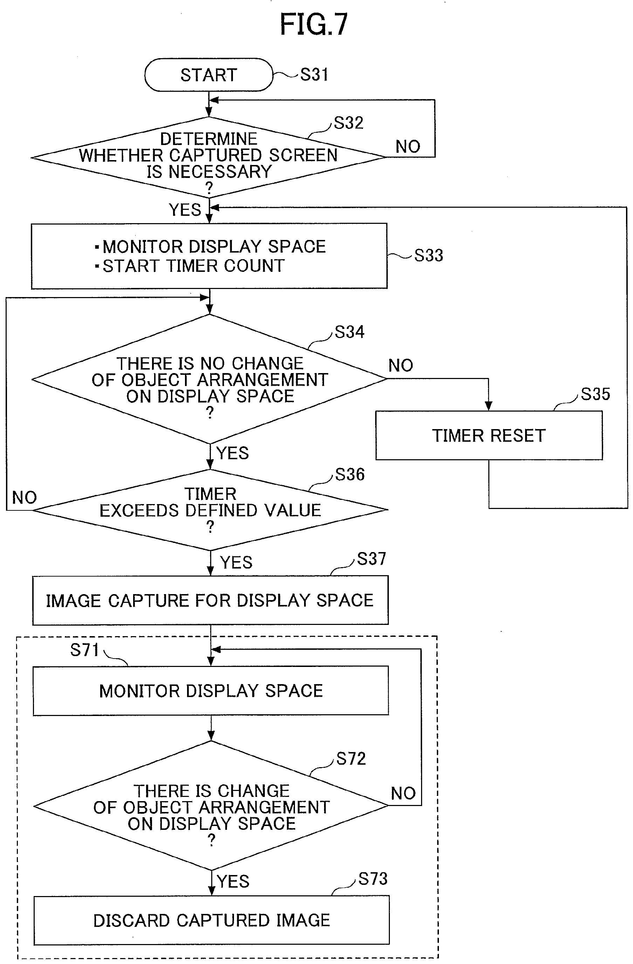

Fig. 7 is a flowchart showing a method example for deleting a captured image. Steps S31-S37 show a procedure for obtaining the captured image which is the same as one described with reference to Fig. 3. Thus, cumulative explanation is not given. Instead of the procedure of steps S31-S37 of Fig. 7, the procedure shown in Fig. 5 or Fig. 6 may be performed.

In step S71, in a case where one or more objects corresponding to an image stored as a captured image are displayed on the display unit 11, the screen control unit 16 determines whether arrangement or a position of at least one object is changed. If it is changed, the captured image is deleted in step S73 since possibility that an image the same as the captured image will be displayed in the future becomes substantially low.

In the above, the present invention has been explained while referring to the specific embodiments. However, these are merely exemplary. Those skilled in the art will conceive of various modified examples, corrected examples, alternative examples, substituted examples, and the like. For example, the present invention may be applied to any information terminal that can scroll the screen.

While specific numerical value examples are used to facilitate understanding of the present invention, such numerical values are merely examples, and any appropriate value may be used unless specified otherwise. Classification into each embodiment or item in the description is not essential in the present invention, and features described in two or more embodiments or items may be combined and used as necessary. Subject matter described in an item may be applied to subject matter described in another item (provided that they do not contradict).

A boundary of a functional unit or a processing unit in the functional block diagram is not necessarily corresponds to a boundary of a physical component. An operation by a plurality of functional units may be physically executed by a single component. Alternatively, an operation by a single functional unit may be physically executed by a plurality of components.

For convenience of explanation, the apparatus according to the embodiment of the present invention has been explained by using a functional block diagram. However, the apparatus may be implemented in hardware, software, or a combination thereof. The software may be stored in any proper storage medium such as a RAM (Random Access Memory), a flash memory, a ROM (Read Only Memory), an
EPROM(Erasable Programmable ROM), an
EEPROM(Electronically Erasable and Programmable ROM), a register, a hard disk (HDD), a removable disk, a CD-ROM, a database, a server and the like.

Therefore, the present invention is not limited to the above-mentioned embodiment and is intended to include various variations, modifications, alterations, substitutions and so on without departing from the scope of the present invention as claimed.

### DESCRIPTION OF REFERENCE SIGNS

- 11: display unit
- 12: operation unit
- 13: operation determination unit
- 14: captured image storing unit
- 15: timer unit
- 16: screen control unit

## Claims

1. An information terminal comprising:
a display unit (11) configured to display an image;
a captured image storing unit (14) configured to store a captured image showing a state in which one or more objects are displayed on the display unit; and
an image control unit (16) configured to cause the display unit to display the captured image in accordance with an operation of scrolling by a user,
wherein the image control unit is configured to cause the display unit to display one or more objects corresponding to a captured image stored in the captured image storing unit (14), at an end point of the scrolling performed by the user, while superimposing the one or more objects on a background image, and
wherein, in a case where either the period during which, or else the number of times, an image is displayed by the display unit without change of arrangement of an object displayed while being superimposed on the background image is equal to or greater than a threshold, the image control unit is configured to cause the captured image storing unit to store a captured image corresponding to the image that is currently displayed.

2. The information terminal as claimed in claim 1, wherein, in a case where the number of times the image is displayed by the display unit (11) without change of arrangement of the object displayed while being superimposed on the background image is less than a reference threshold, and the period during which the image is displayed without change of the arrangement is equal to or greater than a timer threshold, the image control unit (16) is configured to cause the captured image storing unit to store the captured image corresponding to the image that is currently displayed.

3. The information terminal as claimed in claim 2, wherein the timer threshold in the case where the number of times the image is displayed by the display unit without change of arrangement of the object displayed while being superimposed on the background image is equal to or greater than the reference threshold, is shorter than the timer threshold in the case where the number of times is less than the reference threshold.

4. The information terminal as claimed in any one of claims 1-3, wherein the image control unit (16) is configured to discard (S73) a captured image of an image in which arrangement of an object has been changed.

5. An information displaying method performed by an information terminal comprising: a display unit (11) configured to display an image; a captured image storing unit (14) configured to store a captured image showing a state in which one or more objects are displayed on the display unit; and an image control unit (16) configured to cause the display unit to display the captured image in accordance with an operation of scrolling by a user, the information displaying method comprising the steps of:
displaying, by the display unit, one or more objects corresponding to a captured image stored in the captured image storing unit (14), at an end point of the scrolling performed by the user, while superimposing the one or more objects on a background image, and
in a case where either the period during which, or else the number of times, an image is displayed by the display unit (11) without change of arrangement of an object displayed while being superimposed on the background image is equal to or greater than a threshold, storing, by the captured image storing unit (14), a captured image corresponding to the image that is currently displayed, according to control by the image control unit.

6. The information displaying method as claimed in claim 5, wherein, in a case where the number of times the image is displayed by the display unit without change of arrangement of the object displayed while being superimposed on the background image is less than a reference threshold, and the period during which the image is displayed without change of the arrangement is equal to or greater than a timer threshold, the captured image storing unit stores the captured image corresponding to the image that is currently displayed according to control by the image control unit.

7. The information displaying method as claimed in claim 6, wherein the timer threshold in the case where the number of times the image is displayed by the display unit without change of arrangement of the object displayed while being superimposed on the background image is equal to or greater than the reference threshold, is shorter than the timer threshold in the case where the number of times is less than the reference threshold.

8. The information displaying method as claimed in any one of claims 5-7, wherein, in captured images stored by the captured image storing unit, a captured image of an image in which arrangement of an object has been changed is discarded (S73).

## Patentansprüche

1. Informationsendgerät, umfassend:
eine Anzeigeeinheit (11), die dafür konfiguriert ist, ein Bild anzuzeigen;
eine Aufnahmespeichereinheit (14), die dafür konfiguriert ist, eine Aufnahme zu speichern, die einen Zustand zeigt, in dem ein oder mehrere Objekte auf der Anzeigeeinheit angezeigt werden; und
eine Bildsteuerungseinheit (16), die dafür konfiguriert ist, die Anzeigeeinheit zu veranlassen, die Aufnahme gemäß einer Bildlaufoperation durch einen Benutzer anzuzeigen,
worin die Bildsteuerungseinheit dafür konfiguriert ist, die Anzeigeeinheit zu veranlassen, ein oder mehrere Objekte, die einer in der Aufnahmespeichereinheit (14) gespeicherten Aufnahme entsprechen, an einem Endpunkt des durch den Benutzer durchgeführten Bildlaufs anzuzeigen, während das eine oder die mehreren Objekte einem Hintergrundbild überlagert werden, und
worin in einem Fall, in dem entweder der Zeitraum, währenddessen durch die Anzeigeeinheit ein Bild ohne Änderung der Anordnung eines angezeigten Objekts angezeigt wird, während es dem Hintergrundbild überlagert ist, oder die Anzahl der Male, in denen dies geschieht, gleich einem oder größer als ein Schwellenwert ist, die Bildsteuerungseinheit dafür konfiguriert ist, die Bildspeichereinheit zu veranlassen, eine dem Bild, das gegenwärtig angezeigt wird, entsprechende Aufnahme zu speichern.

2. Informationsendgerät nach Anspruch 1, worin in einem Fall, in dem die Anzahl der Male, in denen durch die Anzeigeeinheit (11) das Bild ohne Änderung der Anordnung des angezeigten Objekts angezeigt wird, während es dem Hintergrundbild überlagert ist, kleiner als ein Referenzschwellenwert ist, und der Zeitraum, währenddessen das Bild ohne Änderung der Anordnung angezeigt wird, gleich einem oder größer als ein Zeitgeberschwellenwert ist, die Bildsteuerungseinheit (16) dafür konfiguriert ist, die Bildspeichereinheit (16) zu veranlassen, eine dem Bild, das gegenwärtig angezeigt wird, entsprechende Aufnahme zu speichern.

3. Informationsendgerät nach Anspruch 2, worin der Zeitgeberschwellenwert in dem Fall, in dem die Anzahl der Male, in denen durch die Anzeigeeinheit das Bild ohne Änderung der Anordnung des angezeigten Objekts angezeigt wird, während es dem Hintergrundbild überlagert ist, gleich dem oder größer als der Referenzschwellenwert ist, kürzer als der Zeitgeberschwellenwert in dem Fall ist, in dem die Anzahl der Male kleiner als der Referenzschwellenwert ist.

4. Informationsendgerät nach einem der Ansprüche 1 bis 3, worin die Bildsteuerungseinheit (16) dafür konfiguriert ist, eine Aufnahme eines Bildes, in dem die Anordnung eines Objekts geändert worden ist, zu verwerfen (S73).

5. Informationsanzeigeverfahren, durchgeführt durch ein Informationsendgerät, welches umfasst: eine Anzeigeeinheit (11), die dafür konfiguriert ist, ein Bild anzuzeigen; eine Aufhahmespeichereinheit (14), die dafür konfiguriert ist, eine Aufnahme zu speichern, die einen Zustand zeigt, in dem ein oder mehrere Objekte auf der Anzeigeeinheit angezeigt werden; und eine Bildsteuerungseinheit (16), die dafür konfiguriert ist, die Anzeigeeinheit zu veranlassen, die Aufnahme gemäß einer Bildlaufoperation durch einen Benutzer anzuzeigen, wobei das Informationsanzeigeverfahren die Schritte umfasst:
durch die Anzeigeeinheit erfolgendes Anzeigen von einem oder mehreren Objekten, die einem in der Aufnahmespeichereinheit (14) gespeicherten Bild entsprechen, an einem Endpunkt des durch den Benutzer durchgeführten Bildlaufs, während das eine oder die mehreren Objekte einem Hintergrundbild überlagert werden, und
in einem Fall, in dem entweder der Zeitraum, währenddessen durch die Anzeigeeinheit (11) ein Bild ohne Änderung der Anordnung eines angezeigten Objekts angezeigt wird, während es dem Hintergrundbild überlagert ist, oder die Anzahl der Male, in denen dies geschieht, gleich einem oder größer als ein Schwellenwert ist, Speichern einer dem Bild, das gegenwärtig angezeigt wird, entsprechenden Aufnahme durch die Aufhahmespeichereinheit (14) gemäß der Steuerung durch die Bildsteuerungseinheit.

6. Informationsdarstellungsverfahren nach Anspruch 5, worin in einem Fall, in dem die Anzahl der Male, in denen durch die Anzeigeeinheit das Bild ohne Änderung der Anordnung des angezeigten Objekts angezeigt wird, während es dem Hintergrundbild überlagert ist, kleiner als ein Referenzschwellenwert ist, und der Zeitraum, währenddessen das Bild ohne Änderung der Anordnung angezeigt wird, gleich einem oder größer als ein Zeitgeberschwellenwert ist, die Aufnahmespeichereinheit die dem Bild, das gegenwärtig angezeigt wird, entsprechende Aufnahme gemäß der Steuerung durch die Bildsteuerungseinheit speichert.

7. Informationsdarstellungsverfahren nach Anspruch 6, worin der Zeitgeberschwellenwert in dem Fall, in dem die Anzahl der Male, in denen durch die Anzeigeeinheit das Bild ohne Änderung der Anordnung des angezeigten Objekts angezeigt wird, während es dem Hintergrundbild überlagert ist, gleich dem oder größer als der Referenzschwellenwert ist, kürzer als der Zeitgeberschwellenwert in dem Fall ist, in dem die Anzahl der Male kleiner als der Referenzschwellenwert ist.

8. Informationsdarstellungsverfahren nach einem der Ansprüche 5 bis 7, worin in durch die Aufnahmespeichereinheit gespeicherten Aufnahmen eine Aufnahme eines Bildes, in dem die Anordnung eines Objekts geändert worden ist, verworfen wird (S73).

## Revendications

1. Terminal d'information comprenant :
une unité d'affichage (11) configurée pour afficher une image ;
une unité de mémorisation d'image capturée (14) configurée pour mémoriser une image capturée montrant un état dans lequel un ou plusieurs objets sont affichés sur l'unité d'affichage ; et
une unité de commande d'image (16) configurée pour amener l'unité d'affichage à afficher l'image capturée conformément à une opération de défilement effectuée par un utilisateur,
dans lequel l'unité de commande d'image est configurée pour amener l'unité d'affichage à afficher un ou plusieurs objets correspondant à une image capturée mémorisée dans l'unité de mémorisation d'image capturée (14), à un point de fin du défilement effectué par l'utilisateur, tout en superposant lesdits un ou plusieurs objets sur une image d'arrière-plan, et
dans lequel, dans un cas dans lequel soit la période pendant laquelle, soit autrement le nombre de fois que, une image est affichée par l'unité d'affichage sans changement de l'agencement d'un objet affiché tout en étant superposé sur l'image d'arrière-plan est supérieur ou égal à un seuil, l'unité de commande d'image est configurée pour amener l'unité de mémorisation d'image capturée à mémoriser une image capturée correspondant à l'image qui est actuellement affichée.

2. Terminal d'information selon la revendication 1, dans lequel, dans un cas dans lequel le nombre de fois que l'image est affichée par l'unité d'affichage (11) sans changement de l'agencement de l'objet affiché tout en étant superposé sur l'image d'arrière-plan est inférieur à un seuil de référence, et la période pendant laquelle l'image est affichée sans changement de l'agencement est supérieure ou égale à un seuil de registre d'horloge, l'unité de commande d'image (16) est configurée pour amener l'unité de mémorisation d'image capturée à mémoriser l'image capturée correspondant à l'image qui est actuellement affichée.

3. Terminal d'information selon la revendication 2, dans lequel le seuil de registre d'horloge dans le cas dans lequel le nombre de fois que l'image est affichée par l'unité d'affichage sans changement de l'agencement de l'objet affiché tout en étant superposé sur l'image d'arrière-plan est supérieur ou égal au seuil de référence est plus court que le seuil de registre d'horloge dans le cas dans lequel le nombre de fois est inférieur au seuil de référence.

4. Terminal d'information selon l'une quelconque des revendications 1 à 3, dans lequel l'unité de commande d'image (16) est configurée pour abandonner (S73) une image capturée d'une image dans laquelle l'agencement d'un objet a été changé.

5. Procédé d'affichage d'informations effectué par un terminal d'information comprenant : une unité d'affichage (11) configurée pour afficher une image ; une unité de mémorisation d'image capturée (14) configurée pour mémoriser une image capturée montrant un état dans lequel un ou plusieurs objets sont affichés sur l'unité d'affichage ; et une unité de commande d'image (16) configurée pour amener l'unité d'affichage à afficher l'image capturée conformément à une opération de défilement effectuée par un utilisateur, le procédé d'affichage d'informations comprenant les étapes :
d'affichage, par l'unité d'affichage, d'un ou de plusieurs objets correspondant à une image capturée mémorisée dans l'unité de mémorisation d'image capturée (14), à un point de fin du défilement effectué par l'utilisateur, tout en superposant lesdits un ou plusieurs objets sur une image d'arrière-plan, et
dans un cas dans lequel soit la période pendant laquelle, soit autrement le nombre de fois que, une image est affichée par l'unité d'affichage (11) sans changement de l'agencement d'un objet affiché tout en étant superposé sur l'image d'arrière-plan est supérieur ou égal à un seuil, de mémorisation, par l'unité de mémorisation d'image capturée (14), d'une image capturée correspondant à l'image qui est actuellement affichée, conformément à la commande effectuée par l'unité de commande d'image.

6. Procédé d'affichage d'informations selon la revendication 5, dans lequel, dans un cas dans lequel le nombre de fois que l'image est affichée par l'unité d'affichage sans changement de l'agencement de l'objet affiché tout en étant superposé sur l'image d'arrière-plan est inférieur à un seuil de référence, et la période pendant laquelle l'image est affichée sans changement de l'agencement est supérieure ou égale à un seuil de registre d'horloge, l'unité de mémorisation d'image capturée mémorise l'image capturée correspondant à l'image qui est actuellement affichée conformément à la commande effectuée par l'unité de commande d'image.

7. Procédé d'affichage d'informations selon la revendication 6, dans lequel le seuil de registre d'horloge dans le cas dans lequel le nombre de fois que l'image est affichée par l'unité d'affichage sans changement de l'agencement de l'objet affiché tout en étant superposé sur l'image d'arrière-plan est supérieur ou égal au seuil de référence est plus court que le seuil de registre d'horloge dans le cas dans lequel le nombre de fois est inférieur au seuil de référence.

8. Procédé d'affichage d'informations selon l'une quelconque des revendications 5 à 7, dans lequel, dans les images capturées mémorisées par l'unité de mémorisation d'image capturée, une image capturée d'une image dans laquelle l'agencement d'un objet a été changé est abandonnée (S73).
